# NOUVEAU FASCICULE DE BREVET EUROPEEN

(11) **EP 1 641 870 B2**
(45) Date de publication et mention de la décision concernant l'opposition: **09.08.2017**
(45) Mention de la délivrance du brevet: 07.01.2009
(21) Numéro de dépôt: 04767289.4
(22) Date de dépôt: 09.06.2004
(51) Int. Cl.: C08K 5/00, C08L 83/04

(54) **COMPOSITION POLYORGANOSILOXANE MONOCOMPOSANTE RETICULANT EN ELASTOMERE SILICONE**
EINKOMPONENTIGE POLYORGANOSILOXANZUSAMMENSETZUNG, DIE ZU EINEM SILIKONELASTOMER VERNETZT
SINGLE-COMPONENT POLYORGANOSILOXANE COMPOSITION WHICH CROSSLINKS INTO A SILICON ELASTOMER

(30) Priorité: 27.06.2003 FR 0307815
(43) Date de publication de la demande: 05.04.2006
(73) Titulaire: Bluestar Silicones France, 69486 Lyon Cedex 03 (FR)
(72) Inventeur: CHAUSSADE, Marc, F-69100 Villeurbanne (FR); PREBET, Christiane, F-69440 Taluyers (FR)
(86) Numéro de dépôt international: PCT/FR2004/001423
(87) Numéro de publication internationale: WO 2005/003222

(56) Documents cités:
- EP-A- 0 164 470
- US-A- 4 357 443
- PATENT ABSTRACTS OF JAPAN vol. 004, no. 151 (C-028), 23 octobre 1980 (1980-10-23) & JP 55 098251 A (NIPPON OIL & FATS CO LTD), 26 juillet 1980 (1980-07-26)

## Description

Le domaine de l'invention est celui des mastics silicones monocomposants, stables au stockage en absence d'humidité, et réticulant par polycondensation en élastomères adhérant sur divers supports, à température ambiante (par exemple 5 à 35°C) et en présence d'eau (par exemple humidité ambiante).

Les formulations des élastomères réticulant par polycondensation fait généralement intervenir une huile silicone, généralement polydiméthylsiloxane (PDMS), à terminaisons hydroxylées, éventuellement pré-fonctionnalisées par un silane de façon à présenter des extrémités Si(OR)a, un réticulant R_{b}Si(OR')_{4-b}, où b<3, un catalyseur de polycondensation, classiquement un sel d'étain ou un titanate d'alkyle, une charge de renfort et d'éventuels autres additifs comme des charges de bourrage, des promoteurs d'adhérence, des colorants, des agents biocides, etc. Lors de la réticulation, l'humidité atmosphérique (ou éventuellement introduite dans une partie de la composition dans le cas des bicomposants) permet la réaction de polycondensation, qui conduit à la formation du réseau élastomérique.

Ces élastomères peuvent être utilisés en mono ou en bicomposant, dans un large domaine d'application, comme le collage, l'étanchéité et le moulage. Les plus grands débouchés sont l'apanage des produits monocomposants ou mastics qui réticulent à l'aide de l'humidité de l'air.

De tels mastics à base d'élastomères silicones, sont notamment utilisés dans le bâtiment, en tant que moyen d'étanchéification, de jointoiement et/ou d'assemblage entre autres. Les propriétés rhéologiques de ces mastics silicones monocomposants (forme pâteuse) font l'objet de beaucoup d'attention dans ces applications. Il en va de même en ce qui concerne leur résistance aux intempéries et à la chaleur, leur flexibilité à basse température, leur facilité de mise en oeuvre et leur réticulation/durcissement rapide in situ, au contact de l'humidité de l'air.

Lors de sa prise, le mastic forme d'abord une peau superficielle (prise en surface), puis la réticulation doit se poursuivre à coeur jusqu'à durcissement complet (prise à coeur). La cinétique de prise est un critère essentiel des mastics. Il est donc d'un grand intérêt de pouvoir disposer de compositions monocomposantes réticulables à coeur ayant une cinétique de prise aussi rapide que possible.

US-A-4 357 443 décrit une composition monocomposante réticulable à température ambiante, comprenant un polydiorganosiloxane à extrémités silanol, un alcoxysilane et un composé du vanadium. Ce document mentionne l'usage du composé du vanadium comme catalyseur de la réticulation et l'alcoxysilane comme réticulant. Cependant les composés au vanadium présentent une forte réactivité vis-à-vis des extrémités silanol du polydiorganosiloxane, et il est donc plus que probable que le composé du vanadium vient se greffer sur les extrémités du polydiorganosiloxane et joue un rôle de réticulant. Il apparaît en outre que la capacité à réticuler à coeur n'est pas conservée après vieillissement de la composition, lorsque cette dernière ne comprend pas l'alcoxysilane (méthyltriméthoxysilane). Ce document de démontre pas que le composé du vanadium puisse développer une activité de catalyseur *per se* dans des compositions réticulables en élastomère.

EP-A-0 164 470 décrit des compositions silicone réticulables en couche mince pour l'anti-adhérence. Ces compositions font appel à des huiles silicone spécifiques et à des catalyseurs organométalliques variés appartenant aux familles suivantes : esters du titane, esters du zirconium, esters de l'hafnium, esters d'oxyde de vanadium. L'enseignement de ce document se limite à la capacité de ces catalyseurs à induire la réticulation de compositions spécifiques en couche mince, sans qu'il puisse être tiré aucun enseignement sur la capacité de ces catalyseurs à pouvoir conduire à la réticulation à coeur dans le cadre de compositions pour mastic.

La présente invention a pour objectif de proposer une composition de mastic silicone monocomposant, stable au stockage en l'absence d'humidité, apte à réticuler/durcir rapidement en élastomère adhérent à température ambiante (5-35°C) et en présence d'eau essentiellement apportée par l'humidité ambiante. En particulier, un objectif est de proposer une telle composition déployant une cinétique de prise en surface remarquablement rapide, suivie d'une prise à coeur complète.

Un autre objectif de l'invention est de proposer une telle composition ne dégageant pas de produit volatile toxique lors de la réticulation.

Ces objectifs, ainsi que d'autres, sont atteints par l'emploi d'un composé du vanadium, comme catalyseur ou accélérateur de la réaction de réticulation d'une composition polyorganosiloxane (POS) monocomposante stable au stockage en absence d'humidité et réticulant, en présence d'eau, en élastomère, composition dans laquelle les POS sont des POS linéaires réticulables non hydroxylés et présentant des extrémités fonctionnalisées de type alcoxy, oxime, acyle et /ou énoxy, de préférence alcoxy. L'invention n'exclut pas la présence d'une proportion minoritaire de POS comportent des groupes OH, i.e. pouvant représenter moins de 10 µmol en OH par g de composition. En effet, ces POS peuvent être issus d'une réaction de fonctionnalisation d'un POS à terminaisons hydroxylées avec un réticulant adapté et en présence d'un catalyseur de fonctionnalisation, et il peut toujours subsister quelques chaînes POS avec des terminaisons hydroxylées. De préférence, les POS selon l'invention en sont entièrement dépourvus. La composition peut en outre comprendre les autres ingrédients classiques, notamment une charge.

L'invention a donc pour objet une composition polyorganosiloxane (POS) monocomposante stable au stockage en l'absence d'humidité et réticulant, en présence d'eau, en élastomère, composition comprenant au moins un polyorganopolysiloxane POS linéaire réticulable, une charge minérale et un catalyseur de réticulation, caractérisée en ce que le POS présente des extrémités fonctionnalisées non-hydroxylées, notamment des extrémités de type alcoxy, oxime, acyle et /ou énoxy, de préférence alcoxy, en ce que la composition est essentiellement dépourvue de POS hydroxylés, i.e. moins de 10 µmol en OH par g de composition, et en ce que le catalyseur est un composé du vanadium,
ladite composition est caractérisée en ce qu'elle comprend :
-A- au moins un polyorganopolysiloxane linéaire réticulable A de formule : 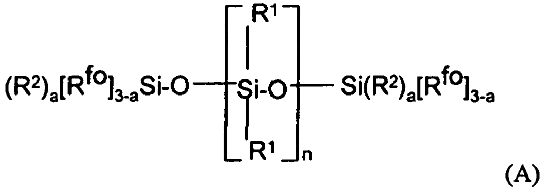 dans laquelle :
   - les substituants R¹, identiques ou différents, représentent chacun un radical monovalent hydrocarboné saturé ou non en C₁ à C₁₃, substitué ou non substitué, aliphatique, cyclanique ou aromatique ;
   - les substituants R², identiques ou différents, représentent chacun un radical monovalent hydrocarboné saturé ou non en C₁ à C₁₃, substitué ou non substitué, aliphatique, cyclanique ou aromatique ;
   - les substituants de fonctionnalisation R^{fo}, identiques ou différents, représentent chacun :
      - un reste oxime de formule :

         (R³)₂C=N-O-

         avec R³ représentant indépendamment, un alkyle linéaire ou ramifié en C₁ à C₈ ; un cycloalkyle en C₃ à C₈, un alcényle en C₂-C₈,
      - un reste alcoxy de formule :

         OR⁴(CH₂CH₂O)_{b} -

         avec R⁴ représentant indépendamment, un alkyle linéaire ou ramifié en C₁ à C₈ ; un cycloalkyle en C₃ à C₈ et b = 0 ou 1;
      - un reste acyle de formule : 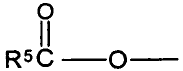 avec R⁵ représentant un radical monovalent hydrocarboné saturé ou non en C₁ à C₁₃, ramifié ou non, substitué ou non substitué, aliphatique, cyclanique ou aromatique,
      - un reste énoxy de formule :

         R⁶R⁶C=CR⁶-O-

         avec les R⁶, identiques ou différents, représentant un hydrogène ou un radical monovalent hydrocarboné saturé ou non en C₁ à C₁₃, ramifié ou non, substitué ou non substitué, aliphatique, cyclanique ou aromatique,
   - n a une valeur suffisante pour conférer au POS **A** une viscosité dynamique à 25°C allant de 1.000 à 1.000.000 mPa.s ;
   - a est zéro ou 1 ;
-B- éventuellement au moins une résine polyorganosiloxane **B** fonctionnalisée par au moins un radical R^{f0} répondant à la définition donnée supra et présentant, dans sa structure, au moins deux motifs siloxyles différents choisis parmi ceux de formules (R¹)₃SiO_{1/2} (motif M), (R¹)₂SiO_{2/2} (motif D), R¹SiO_{3/2} (motif T) et SiO₂ (motif Q), l'un au moins de ces motifs étant un motif T ou Q, les radicaux R¹, identiques ou différents, ayant les significations données supra à propos de la formule (**A**), ladite résine ayant une teneur pondérale en radicaux fonctionnels R^{fo} allant de 0,1 à 10 %, étant entendu qu'une partie des radicaux R¹ sont des radicaux R^{fo} ;
-C-au moins un réticulant C de formule :

   (R²)ₐSi [R^{fo}]₄₋ₐ

   avec R², R^{fo} et a étant tels que définis ci-dessus,
-D- éventuellement au moins un polydiorganosiloxane **D** linéaire non réactif et non fonctionnalisé R^{fo} et de formule : 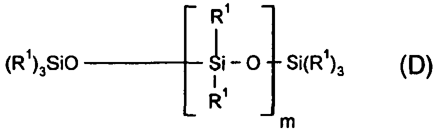 dans laquelle :
   - les substituants R¹, identiques ou différents, ont les mêmes significations que celles données ci-avant pour le polyorganosiloxane **A** de formule (**A**) ;
   - m a une valeur suffisante pour conférer au polymère de formule (**D**) une viscosité dynamique à 25°C allant de 10 à 200.000 mPa.s ;
-E- une quantité efficace d'un composé du vanadium **E** comme catalyseur ou accélérateur de réticulation ;
-F- une charge minérale **F**, notamment charge de renfort et/ou de bourrage, de préférence à base de silice ;
-H- éventuellement au moins un agent auxiliaire **H**.

Les composés du vanadium **E** peuvent être des composés du vanadium aux degrés d'oxydation 3 (V³), 4 (V⁴) ou 5 (V⁵).

Dans un premier mode de réalisation, le composé **E** est un composé du V⁵, et en particulier un composé de formule (E₁) : **X₃VO** dans laquelle les radicaux X, identiques ou différents, sont choisis parmi : les ligands radicalaires X à 1 électron, notamment alcoxy ou atome d'halogène et les ligands LX radicalaires à 3 électrons, en particulier un ligand dérivé de l'acétylacétone, d'un β-cétoester, d'un ester malonique, d'un composé allylé, d'un carbamate, d'un dithiocarbamate, d'un acide carboxylique.

La définition des ligands est tirée de l'ouvrage « Chimie Organométallique » de Didier Astruc, publié en 2000 par EDP Sciences, Cf. notamment Chapitre 1, «Les complexes monométalliques », pages 31 et suivantes.

Par groupe alcoxy, on entend plus particulièrement un groupe OR dans lequel R est un alkyle linéaire ou ramifié en C₁-C₁₃, notamment C₁-C₈, de préférence C₁-C₄, ou un cycloalkyle en C₃-C₈. Comme composés du V⁵ répondant à cette définition, on peut citer à titre d'exemple les vanadates trialcoxy, de préférence les suivants: [(CH₃)₂CHO]₃VO, (CH₃CH₂O)₃VO, [(CH₃)₃CO]₃VO, [(CH₃CH₂)(CH₃)CHO]₃VO, [(CH₃)₂(CH₂)CHO]₃VO.

Comme atome d'halogène, on peut citer Cl, Br et F, et l'on préfère Cl.

Comme dérivé de l'acétylacétone ou d'un composé allylé; on peut citer notamment les radicaux acétylacétonato (CH₃COCHCOCH₃) et allyle (CH₂=CH-CH₂).

Dans un autre mode de réalisation, le composé E est un composé du V⁴, et en particulier un composé de formule (E₂) : **X₂VO** dans laquelle les radicaux X, identiques ou différents, sont choisis parmi : les ligands radicalaires X à 1 électron, notamment alcoxy ou atome d'halogène, comme décrit supra, et les ligand LX radicalaires à 3 électrons, en particulier un ligand dérivé de l'acétÿlacétone, d'un β-cétoester, d'un ester malonique, d'un composé allylé, d'un carbamate, d'un dithiocarbamate, d'un acide carboxylique.

A titre d'exemple d'un tel composé (E₂), on peut citer VOHa₂ (Ha= halogène, e.g. Br, F, Cl), notamment VOCl₂, [(CH₃)₂CHO]₂VO, (CH₃CH₂O)₂VO, [(CH₃)₃CO]₂VO, [(CH₃CH₂)(CH₃)CHO]₂VO, [(CH₃)₂(CH₂)CHO]₂VO.

Comme dérivé de l'acétylacétone ou d'un composé allylé; on peut citer notamment les radicaux acétylacétonato (CH₃COCHCOCH₃) et allyle (CH₂=CH-CH₂).

Dans un autre mode de réalisation, le composé E est un composé du V⁴ de formule (E₃) : **VX₄** dans laquelle les X, identiques ou différents, sont choisis parmi les halogènes, notamment Br, F ou Cl, et les alcoxy OR avec R représentant notamment un alkyle linéaire ou ramifié en C₁-C₁₃, notamment C₁-C₈, de préférence C₁-C₄ ou un cycloalkyle en C₃-C₈.

A titre d'exemple d'un tel composé du vanadium (E₃), on peut citer les composés suivants: [(CH₃)₂CHO]₄V, (CH₃O)₄V, (CH₃CH₂O)₄V, [(CH₃)₃CO]₄V, [(CH₃CH₂)(CH₃)CHO]₄V, [(CH₃)₂(CH₂)CHO]₄V.

Dans encore un autre mode de réalisation, le composé E est un composé du V³, et en particulier un composé de formule (E₄) : **XVO** dans laquelle le radical X est un ligand LX radicalaires à 3 électrons, en particulier un ligand dérivé de l'acétylacétone, d'un β-cétoester, d'un ester malonique, d'un composé allylé, d'un carbamate, d'un dithiocarbamate, d'un acide carboxylique. Comme dérivé de l'acétylacétone ou d'un composé allylé; on peut citer notamment les ligands acétylacétonato (CH₃COCHCOCH₃) et allyle (CH₂=CH-CH₂).

Dans encore un autre mode de réalisation, le composé **E** (E₅) est un composé du V⁵ avec des ligands L₂X radicalaires à 5 électrons, notamment diényles, en particulier cyclopentadiényle, e.g. (C₅H₅)₂V ou (C₅H₅)₂VCl₂.

La composition selon l'invention peut comprendre de 0,1 à 10, de préférence 0,5 à 6 parties en poids de catalyseur de réticulation/durcissement **E**.

Le catalyseur peut être à l'état solide ou liquide. Il peut être incorporé seul ou dans un solvant anhydre approprié, par exemple une huile silicone.

La composition de mastic silicone monocomposant selon l'invention possède toutes les propriétés intéressantes et propres à ce type de produit et présente au surplus une cinétique de réticulation rapide et en particulier une cinétique de prise en surface inégalée. Elle peut être utilisée pour produire des pièces en élastomère ayant les épaisseurs classiques dans ce type d'application, à savoir notamment des épaisseurs allant de 0,5 ou 1 mm à quelques centimètres. Typiquement dans le domaine des joints, l'épaisseur peut être comprise entre 0,5 ou 1 mm et 1,5 ou 2 cm.

En outre, la composition de mastic selon l'invention est économique et conduit à des élastomères réticulés doués de propriétés mécaniques avantageuses et adhérant sur de nombreux supports.

La composition selon l'invention correspond à une forme de réalisation dans laquelle le constituant essentiel, à savoir le POS **A** est fonctionnalisé au niveau de ses extrémités (généralement initialement porteuses de fonctions hydroxyles) par des radicaux de fonctionnalisation R^{fo} provenant d'un silane réticulant **C**. Les OH du précurseur du POS **A** ont réagi avec les R^{fo} du silane réticulant **C**, par condensation.

Le POS **A** est fonctionnalisé selon des techniques connues de l'homme du métier. Ce POS **A** fonctionnalisé correspond à une forme stable en absence d'humidité, du mastic monocomposant ici considéré. En pratique, cette forme stable est celle de la composition conditionnée en cartouches hermétiquement fermées, qui seront ouvertes par l'opérateur lors de l'utilisation et qui lui permettront d'appliquer le mastic sur tous les supports souhaités.

Le précurseur hydroxylé **A**' du POS **A** fonctionnalisé R^{fo} est généralement un polydiorganosiloxane α,ω-hydroxylé de formule : 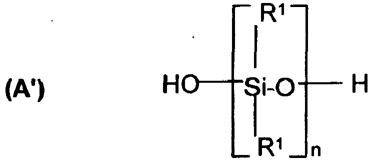 avec R¹ et n tel que défini ci-dessus dans la formule (A).

L'éventuelle résine POS **B** fonctionnalisée R^{fo} peut être produite de la même façon que le POS **A** fonctionnalisé R^{fo}, par condensation avec un silicone réticulant **C** porteur de radicaux de fonctionnalisation R^{fo}.

Le précurseur de la résine POS **B** fonctionnalisée R^{fo} peut être une résine POS **B'** hydroxylée répondant à la définition donnée ci-dessus pour **B** à la différence qu'une partie des radicaux R¹ correspondent à des OH.

La composition de mastic monocomposant selon l'invention peut être du type acide (acétoxy...) ou bien encore du type neutre (enoxy, oxime, alcoxy...).

Selon une disposition préférée de l'invention, la composition de mastic silicone monocomposant concernée est plutôt de type neutre, par exemple oxime ou alcoxy, ce qui signifie que les substituants de fonctionnalisation R^{fo} des formules **A**, **B** et **C**, identiques ou différents, représentent chacun :
- un reste oxime de formule :

   (R³)₂ C=N-O-

   avec R³ représentant indépendamment, un alkyle linéaire ou ramifié en C₁ à C₈ ; un cycloalkyle en C₃ à C₈, un alcényle en C₂-C_{8,} de préférence sélectionné dans le groupe comprenant : méthyle, éthyle, propyle, butyle, vinyle, allyle;
- et/ou un reste alcoxy de formule :

   OR⁴(CH₂CH₂O)_{b} -

   avec R4 représentant indépendamment, un alkyle linéaire ou ramifié en C₁ à C₈ ; un cycloalkyle en C₁ à C₈, de préférence sélectionné dans le groupe comprenant : méthyle, éthyle, propyle, butyle et méthyglycol, et b = 0 ou 1.

Dans un mode plus préféré de réalisation de l'invention, les substituants de fonctionnalisation R^{fo} sont de type alcoxy et répondent à la formule OR⁴(OCH₂CH₂)_{b} telle que définie ci-dessus.

Parmi les auxiliaires **H** ou additifs particulièrement intéressants pour la composition selon l'invention, on citera les promoteurs d'adhérence.

Ainsi la composition POS de mastic monocomposant selon l'invention peut comprendre au moins un promoteur d'adhérence **H1** non nucléophile en particulier et non aminé, de préférence choisi parmi les composés organosiliciques portant à la fois :
(1) des groupes hydrolysables liés à l'atome de silicium et
(2) des groupes organiques substitués par des radicaux choisis dans le groupe des radicaux (méth)acrylate, époxy, et alcényle, et plus préférentiellement encore dans le groupe comportant :
   - le vinyltriméthoxysilane (VTMO),
   - le 3-Glycidoxypropyl-triméthoxysilane (GLYMO),
   - le méthacryloxypropyltriméthoxysilane (MEMO),
   - et leur mélanges.

Pour détailler un peu plus la nature des éléments constitutifs de la composition selon l'invention, il importe de préciser que les substituants R¹ des polymères POS **A** fonctionnalisés, des résines **B** fonctionnalisées R^{fo} et des polymères **D** facultatifs non fonctionnalisés peuvent être sélectionnés dans le groupe formé par :
- les radicaux alkyles et halogénoalkyles ayant de 1 à 13 atomes de carbone,
- les radicaux cycloalkyles et halogénocycloalkyles ayant de 5 à 13 atomes de carbone,
- les radicaux alcényles ayant de 2 à 8 atomes de carbone,
- les radicaux aryles et halogénoaryles mononucléaires ayant de 6 à 13 atomes de carbone,
- les radicaux cyanoalkyles dont les chaînons alkyles ont de 2 à 3 atomes de carbone,
les radicaux méthyle, éthyle, propyle, isopropyle, n-hexyle, phényle, vinyle et 3,3,3-trifluoropropyle étant particulièrement préférés.

Plus précisément encore, et à titre non limitatif, les substituants R¹ mentionnés ci-dessus pour les polymères POS **A** et **D** (facultatifs) comprennent :
- les radicaux alkyles et halogénoalkyles ayant de 1 à 13 atomes de carbone tels que les radicaux méthyle, éthyle, propyle, isopropyle, butyle, pentyle, hexyle, éthyl-2 hexyle, octyle, décyle, trifluoro-3,3,3 propyle, trifluoro-4,4,4 butyle, pentafluoro-4,4,4,3,3 butyle,
- les radicaux cycloalkyles et halogénocycloalkyles ayant de 5 à 13 atomes de carbone tels que les radicaux cyclopentyle, cyclohexyle, méthylcyclohexyle, propylcyclohexyle, difluoro-2,3 cyclobutyle, difluoro-3,4 méthyl-5 cycloheptyle,
- les radicaux alcényles ayant de 2 à 8 atomes de carbone tels que les radicaux vinyle, allyle, butène-2-yle,
- les radicaux aryles et halogénoaryles mononucléaires ayant de 6 à 13 atomes de carbone tels que les radicaux phényle, tolyle, xylyle, chlorophényle, dichlorophényle, trichlorophényle,
- les radicaux cyanoalkyles dont les chaînons alkyles ont de 2 à 3 atomes de carbone tels que les radicaux β-cyanoéthyle et γ-cyanopropyle.

A titre d'exemples concrets de motifs siloxyle D : (R¹)₂SiO_{2/2} présents dans les diorganopolysiloxanes **A** fonctionnalisés R^{fo} de formule (A) et dans les diorganopolysiloxanes non réactifs **D** facultatifs de formule (D), on peut citer :

(CH₃)₂SiO,

CH₃(CH₂=CH)SiO,

CH₃(C₆H₅)SiO,

(C₆H₅)₂SiO,

CF₃CH₂CH₂(CH₃)SiO,

NC-CH₂CH₂(CH₃)SiO,

NC-CH(CH₃)CH₂(CH₂=CH)SiO,

NC-CH₂CH₂CH₂(C₆H₅)SiO.

Il doit être compris que, dans le cadre de la présente invention, on peut utiliser comme polymères fonctionnalisés **A** de formule (A) un mélange constitué de plusieurs polymères -de préférence initialement hydroxylés, puis fonctionnalisés R^{fo}-, qui diffèrent entre eux par la valeur de la viscosité et/ou la nature des substituants liés aux atomes de silicium. Il doit être indiqué de plus que les polymères fonctionnalisés **A** de formule (A) peuvent éventuellement comprendre des motifs siloxyle T de formule R¹SiO_{3/2} et/ou des motifs siloxyles Q : SiO_{4/2} , dans la proportion d'au plus 1 % (ce % exprimant le nombre de motifs T et/ou Q pour 100 atomes de silicium). Les mêmes remarques s'appliquent aux polymères **D** non fonctionnalisés et non réactifs **D** (facultatifs) de formule (D).

Les substituants R¹ des polymères fonctionnalisés **A** et des polymères non réactifs et non fonctionnalisés **D** (facultatifs) avantageusement utilisés, du fait de leur disponibilité dans les produits industriels, sont les radicaux méthyle, éthyle, propyle, isopropyle, n-hexyle, phényle, vinyle et 3,3,3-trifluoropropyle. Plus avantageusement, au moins 80 % en nombre de ces substituants sont des radiaux méthyle.

On met en oeuvre des polymères fonctionnalisés **A** ayant une viscosité dynamique à 25°C allant de 1.000 à 1.000.000 mPa.s et, de préférence, allant de 10.000 à 200.000 mPa.s.

S'agissant des polymères non fonctionnalisés **D** (facultatifs), ils présentent une viscosité dynamique à 25°C allant de 10 à 200.000 mPa.s et, de préférence allant de 50 à 150.000 mPa.s.

Les polymères non réactifs et non fonctionnalisés **D**, quand on les utilise, peuvent être introduits en totalité ou en plusieurs fractions et à plusieurs stades ou à un seul stade de la préparation de la composition.

Les éventuelles fractions peuvent être identiques ou différentes en termes de nature et/ou de proportions. De préférence, **D** est introduit en totalité à un seul stade.

Comme exemples de substituants R¹ des résines POS **B** fonctionnalisées R^{fo} qui conviennent ou qui sont avantageusement utilisés, on peut citer les divers radicaux R¹ du type de ceux mentionnés nommément ci-avant pour les polymères fonctionnalisés **A** et les polymères non réactifs et non fonctionnalisés **D** (facultatifs). Ces résines silicones sont des polymères polyorganosiloxanes ramifiés bien connus dont les procédés de préparation sont décrits dans de nombreux brevets. Comme exemples concrets de résines utilisables, on peut citer les résines MQ, MDQ, TD et MDT.

De préférence, comme exemples de résines utilisables, on peut citer les résines POS **B** fonctionnalisées R^{fo} ne comprenant pas, dans leur structure, de motif Q. De manière plus préférentielle, comme exemples de résines utilisables, on peut citer les résines TD et MDT fonctionnalisées comprenant au moins 20 % en poids de motifs T et ayant une teneur pondérale en groupement R^{fo} allant de 0,3 à 5 %. De manière encore plus préférentielle, on utilise des résines de ce type, dans la structure desquelles au moins 80 % en nombre des substituants R¹ sont des radicaux méthyle. Les groupements fonctionnels R^{fo} des résines **B** peuvent être portés par les motifs M, D et/ou T.

Concernant les POS **A** fonctionnalisés et les réticulants **C**, on peut citer à titre d'exemples concrets de substituants R² qui conviennent particulièrement, les mêmes radicaux que ceux mentionnés nommément ci-avant pour les substituants R¹ des polymères fonctionnalisés **A** et des polymères non fonctionnalisés et non réactifs **D.**

S'agissant des substituants R³, R⁴, R⁵ constitutifs des radicaux de fonctionnalisation R^{fo}, on mentionnera que les radicaux alkyles en C₁-C₄, tels que les radicaux méthyle, éthyle, propyle, isopropyle et n-butyle, s'avèrent plus spécialement appropriés.

Selon le mode préféré de réalisation de la composition, selon l'invention, les radicaux R^{fo} utilisé pour la fonctionnalisation du POS initialement hydroxylé sont de type alcoxy et plus préférentiellement encore sont issus de réticulants silanes **C** choisis dans le groupe comprenant

Si(OCH₃)₄

Si(OCH₂CH₃)₄

Si(OCH₂CH₂CH₃)₄

(CH₃O)₃SiCH₃

(C₂H₅O)₃SiCH₃

(CH₃O)₃Si(CH=CH₂)

(C₂H₅O)₃Si(CH=CH₂)

(CH₃O)₃Si(CH₂-CH=CH₂

(CH₃O)₃Si[CH₂-(CH₃)C=CH₂

(C₂H₅O)₃Si(OCH₃)

Si(OCH₂-CH₂-OCH₃)₄

CH₃Si(OCH₂-CH₂-OCH₃)₃

(CH₂=CH)Si(OCH₂CH₂OCH₃)₃

C₆H₅Si(OCH₃)₃

C₆H₅Si(OCH₂-CH₂-OCH₃)₃.

En pratique, les réticulants silane **C** porteurs des radicaux de fonctionnalisation R^{fo} sont choisis parmi :
Si(OC₂H₅)₄, CH₃Si(OCH₃)₃, CH₃Si(OC₂H₅)₃, (C₂H₅O)₃Si(OCH₃), (CH₂=CH)Si(OCH₃)₃, (CH₂=CH)Si(OC₂H₅)₃.

La charge minérale **F** peut être constituée de silice amorphe sous forme d'un solide. L'état physique dans lequel se présente la silice est indifférent, c'est-à-dire que ladite charge peut se présenter sous forme de poudre, de microperles, de granulés ou de billes.

A titre de silice amorphe susceptible d'être mise en oeuvre dans l'invention, conviennent toutes les silices précipitées ou pyrogénées (ou silices de combustion) connues de l'homme de l'art. Bien entendu, on peut utiliser aussi des coupages de différentes silices.

On préfère les silices de précipitation sous forme de poudre, les silices de combustion sous forme de poudre ou leurs mélanges ; leur surface spécifique BET est généralement supérieure à 40 m²/g et, de préférence, comprise ente 100 et 300 m²/g ; à titre plus préférentiel, on utilise les silices de combustion sous forme de poudre.

Selon une variante, la charge **F** peut être constituée, au-delà des silices, par des charges blanches opacifiantes, telles que des carbonates de calcium, des oxydes de titane ou d'aluminium, voire même par des noirs de fumées.

En pratique, les charges **F** peuvent se présenter sous la forme de produits minéraux et/ou organiques plus grossièrement divisés, de diamètre particulaire moyen supérieur à 0,1 micron ; parmi les charges préférées figurent le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, la poudre de liège, la sciure de bois, les phtalocyanines, les fibres minérales et organiques, les polymères organiques (polytétrafluoroéthylène, polyéthylène, polypropylène, polystyrène, polychlorure de vinyle).

Ces charges peuvent être modifiées en surface, et plus spécialement les charges d'origine minérale, par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclo- polysilazanes (brevets FR 1 126 884, FR 1 136 885, FR 1 236 505, GB 1 024 234). Les charges traitées renferment, dans la plupart des cas, de 3 à 30 % de leur poids de composés organosiliciques.

L'introduction des charges a pour but de conférer de bonnes caractéristiques mécaniques et rhéologiques aux élastomères découlant du durcissement des compositions conformes à l'invention. On peut introduire une seule espèce de charges ou des mélanges de plusieurs espèces.

En combinaison avec ces charges peuvent être utilisés des pigments minéraux et/ou organiques ainsi que des agents améliorant la résistance thermique (sels et oxydes de terres rares tels que les oxydes et hydroxydes cériques) et/ou la résistance à la flamme des élastomères. Parmi les agents améliorant la résistance à la flamme peuvent être cités les dérivés organiques halogénés, les dérivés organiques du phosphore, les dérivés du platine tels que l'acide chloroplatinique (ses produits de réaction avec des alcanols, des éthers-oxydes), les complexes chlorure platineux-oléfines. Ces pigments et agents représentent ensemble au plus 20 % du poids des charges.

Selon une caractéristique préférée de l'invention, la composition POS de mastic monocomposant composant :
- 100 parties en poids de diorganopolysiloxane(s) linéaire(s) **A** fonctionnalisé(s) par R^{fo},
- de 0 à 30, de préférence de 5 à 15, parties en poids de résine(s) hydroxylée(s) **B,**
- de 2 à 15, de préférence de 3,5 à 12, parties en poids de réticulant(s) **C**,
- de 0 à 60, de préférence de 5 à 60, parties en poids de diorganopolysiloxane(s) linéaire(s) non fonctionnalisé(s) et non réactif(s) **D**,
- de 0,1 à 10 de préférence de 0,5 à 6 parties en poids de catalyseur de réticulation/durcissement **E**
- de 2 à 250, de préférence de 10 à 200, parties en poids de charge à base de silice et/ou de carbonate **F**, et
- de 0 à 20, notamment de 0,1 à 20, de préférence de 0,1 à 10, parties en poids de promoteur d'adhérence **H**.

D'autres agents auxiliaires et additifs **H** usuels peuvent être incorporés à la composition selon l'invention ; ceux-ci sont choisis en fonction des applications dans lesquelles sont utilisées lesdites compositions.

Les compositions conformes à l'invention durcissent à température ambiante et notamment à des températures comprises entre 5 et 35°C en présence d'humidité. Le durcissement (ou la réticulation) s'effectue de l'extérieur vers l'intérieur de la masse des compositions. Il se forme d'abord, en surface, une peau, puis la réticulation se poursuit dans la masse.

Ces compositions peuvent être employées pour de multiples applications comme le jointoiement dans l'industrie du bâtiment, l'assemblage et le collage de matériaux les plus divers (métaux ; matières plastiques comme par exemple le PVC, le PMMA ; les caoutchoucs naturels et synthétiques ; bois ; carton ; faïence ; brique ; verre ; pierre ; béton ; éléments de maçonnerie), et ceci aussi bien dans le cadre de l'industrie du bâtiment que dans celui des industries de l'automobile, de l'électroménager et de l'électronique.

Les compositions organopolysiloxanes monocomposantes conformes à la présente invention sont préparées à l'abri de l'humidité en opérant dans un réacteur fermé, muni d'une agitation, dans lequel on peut au besoin faire le vide, puis remplacer éventuellement l'air chassé par un gaz anhydre, par exemple par de l'azote.

A titre d'exemples d'appareillages, on peut citer : les disperseurs lents, les malaxeurs à pale, à hélice, à bras, à ancre, les malaxeurs planétaires, les malaxeurs à crochet, les extrudeuses à vis unique ou à plusieurs vis.

L'invention sera mieux comprise à l'aide des exemples non limitatifs qui suivent.

### EXEMPLES

### Exemple comparatif 1 : Formulation d'un RTV1 catalysé par Ti(OBu)₄

Dans la cuve d'un mélangeur uniaxial « papillon » sont chargés 791 g d'huile polydiméthylsiloxane α,ω-dihydroxylée (huile hydroxylée) de viscosité environ 135 000 mPa.s, 240 g d'huile polydiméthylsiloxane α,ω-triméthylsilylée (huile méthylée) de viscosité environ 100 mPa.s, 3,6 g d'un polyéther type Breox B225® et 36,0 g de réticulant type vinyltriméthoxysilane. L'ensemble est mélangé à 200 Tr/min pendant 2 min et 4,6 g d'un catalyseur de fonctionnalisation à la lithine sont introduits dans la cuve. On laisse la réaction de fonctionnalisation se produire pendant 4 min sous agitation de 400 Tr/min, puis 114 g de silice de pyrogénation développant une surface spécifique d'environ 150 m²/g sont incorporés à vitesse d'agitation modérée (160 Tr/min), puis plus vive (4 min à 400 Tr/min) pour achever la dispersion de la silice dans le mélange.

On introduit alors en 30 s 15,6 g (soit 3,8 mmol/100 g) de catalyseur (tétrabutoxyde de titane [CH₃(CH₂)₃O]₄Ti. On mélange 4 min à 400 Tr/min, puis 6 min à 130 Tr/min sous un vide de 29 mbar. On obtient une pâte qui est transférée dans une cartouche fermée hermétiquement.

### Exemple 2 : Formulation d'un RTV1 catalysé par [(CH₃)₂CH-O]₃VO

Le procédé est identique au précédent mais au lieu d'introduire le catalyseur au titane, on introduit 11,2 g (soit 3,8 mmol/100 g) de catalyseur triisopropoxyde de vanadyl [(CH₃)₂CH-O]₃VO).

**Résultats des exemples 1 et 2 :**

| **catalyseur** | **Ti(OBu)₄** | | **[(CH₃)₂CH-O]₃VO** | |
|---|---|---|---|---|
| conditions | initiale | vieilli* | initiale | vieilli* |
| Coulabilité (mm en 30 min) | 1 | Nd | 0 | Nd |
| Extrusion (buse 3 mm sous 3 bars | 60,4 | Nd | 47,5 | Nd |
| Temps de Formation de Peau (min) | 11 | Nd | 1 | Nd |
| Temps hors collant (min) | > 120 | Nd | 30 | Nd |

| Propriétés après 7 j de réticulation : | | | | |
|---|---|---|---|---|
| Résistance à la rupture (Mpa) | 1,95 | Nd | 2,1 | Nd |
| Allongement à la rupture (%) | 650 | Nd | 590 | Nd |
| Module à 100 % (Mpa) | 0,36 | Nd | 0,43 | Nd |
| Dureté 6 mm (Shore A) | 17,5 | 11 | 21 | 15 |

| | | | | |
|---|---|---|---|---|
| • *Cartouche vieillie 21 jours à 50° C (vieillissement accéléré) • Nd : non déterminé | | | | |

Commentaires : Avec la catalyse au vanadium, on obtient un produit stable ayant des propriétés équivalentes au témoin utilisant un catalyseur classique. On remarque un niveau de réticulation supérieur. L'avantage majeur est qu'il procure une cinétique de prise et notamment une cinétique de prise en surface (caractérisée à la fois par le TFP défini ci-dessus et le temps hors collant) extrêmement rapide comparé au témoin utilisant un catalyseur au titane.

Après un test de vieillissement, la prise du mastic catalysé au [(CH₃)₂CH-O]₃VO continue de réticuler et de former un réseau parfaitement compatible avec l'application alors que le mastic au Ti(Obu)₄ est en retrait.

### Exemple 3 : Synthèse d'une base non catalysée (empâtage)

Dans la cuve d'un mélangeur uniaxial « papillon » sont chargés 1030 g d'huile polydiméthylsiloxane α,ω-dihydroxylée (huile « hydroxylée ») de viscosité environ 50 000 mPa.s et 33,0 g de réticulant type vinyltriméthoxysilane. L'ensemble est mélangé à 200 Tr/min pendant 2 min et 4,2 g d'un catalyseur de fonctionnalisation à la lithine sont introduits dans la cuve. On laisse la réaction de fonctionnalisation se produire pendant 4 min sous agitation de 400 Tr/min, puis 33,0 g de silice de pyrogénation développant une surface spécifique d'environ 150 m²/g sont incorporés à vitesse d'agitation modérée (160 Tr/min), puis plus vive (4 min à 400Tr/min) pour en achever la dispersion de la silice dans le mélange. On obtient un fluide viscoélastique assez épais mais encore coulant. L'empâtage obtenu est dégazé sous vide (6 min à 130 Tr/min sous vide de 30 mbar), puis transféré dans un récipient pour stockage.

### Exemple 4 : Ajout de catalyseurs dans l'empâtage

Pour obtenir un élastomère réticulant avec l'humidité atmosphérique, on a ajouté, à 30-X g de l'empâtage obtenu à l'exemple 3, une quantité X de différents catalyseur de condensation correspondant à une quantité fixée en moles d'espèce catalytique.

Les différents catalyseurs comparés sont :
- le FASCAT® 4202 CL de Atofina (dilaurate de dibutylétain) contenant 18,1 % d'étain ;
- le titanate de tétrabutyle (« TBT ») contenant 14,1 % de titane ;
- le triisopropoxyde de vanadyl [(CH₃)₂CH-O]₃VO contenant 20,9 % de vanadium;
- le trichlorure de vanadyl Cl₃VO contenant 29,4 % de vanadium;
- le naphténate de vanadyl à 35 % (« NaVO ») dans l'acide naphténique à environ 3 % de vanadium;

### Résultats :

Les potentialités catalytiques de chaque composition ont été évaluées de trois façons :
- le temps de formation de peau « TFP » (temps au bout duquel on observe une réticulation superficielle) ;
- la persistance d'un toucher collant à 24 h (« TC 24h ») ;
- la dureté (en Shore A) au bout de 7 jours de réticulation à 23°C/50% HR (dureté des faces dessus/dessous d'un pion de 6 mm d'épaisseur environ) norme ASTM-D-2240.

| catalyseur | X (%) | [cata] (µmol/g) | TFP | TC 24h (oui/non) | Dureté (Shore A) | |
|---|---|---|---|---|---|---|
| | | | | | dessus | dessous |
| Fascat 4202 CL | 2,5 | 38 | 10 min | Non | 18,5 | 17 |
| TBT | 1,3 | 38 | 30 min | Non | 19 | 13,5 |
| [(CH₃)₂CH-O]₃VO | 0,93 | 38 | 5 min | Non | 23 | 13,5 |
| Cl₃VO | 0,66 | 38 | 5 min | Non | 21 | 12 |
| « NaVO » | 6,5 | 38 | >1h | Non | 19 | 19 |

### Commentaires

Les catalyseurs au vanadyl permettent une bonne réticulation. La vitesse de prise est largement supérieure à celle du catalyseur au titane et du catalyseur à l'étain. Ils permettent d'atteindre un toucher non collant avant 24 h. La dureté à 7 jours est variable selon les catalyseurs et peut aller jusqu'à 20-23 Shore A en surface au contact de l'air. La face inférieure (au contact du support) présente également un niveau de réticulation suffisant au bout de 7 jours avec une dureté toujours supérieure à 12 ShoreA, ce qui met en évidence l'existence d'une réticulation à coeur.

## Revendications

1. Une composition polyorganosiloxane (POS) monocomposante essentiellement dépourvue de POS hydroxylés, i.e. moins de 10 µmol en OH par g de composition, pour application mastic stable au stockage en l'absence d'humidité et réticulant, en présence d'eau, en élastomère, composition comprenant :
-**A**- au moins un polyorganopolysiloxane linéaire réticulable **A** de formule : 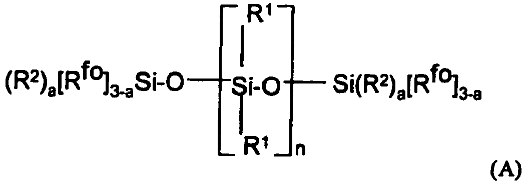 dans laquelle :
- les substituants R¹, identiques ou différents, représentent chacun un radical monovalent hydrocarboné saturé ou non en C₁ à C₁₃, substitué ou non substitué, aliphatique, cyclanique ou aromatique ;
- les substituants R², identiques ou différents, représentent chacun un radical monovalent hydrocarboné saturé ou non en C₁ à C₁₃, substitué ou non substitué, aliphatique, cyclanique ou aromatique ;
• les substituants de fonctionnalisation R^{fo}, identiques ou différents, représentent chacun :
• un reste oxime de formule :
(R³)₂ C=N-O-
avec R³ représentant indépendamment, un alkyle linéaire ou ramifié en C₁ à C₈ un cycloalkyle en C₃ à C₈, un alcényle en C₂-C₈,
• un reste alcoxy de formule :
OR⁴(CH₂CH₂O)_{b}-
avec R⁴ représentant indépendamment, un alkyle linéaire ou ramifié en C₁ à C₈ ; un cycloalkyle en C₃ à C₈ et b = 0 ou 1;
• un reste acyle de formule : 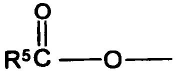 avec R⁵ représentant un radical monovalent hydrocarboné saturé ou non en C₁ à C₁₃, ramifié ou non, substitué ou non substitué, aliphatique, cyclanique ou aromatique,
• un reste énoxy de formule :
R⁶R⁶C=CR⁶-O-
avec les R⁶, identiques ou différents, représentant l'hydrogène ou un radical monovalent hydrocarboné saturé ou non en C₁ à C_{13,} ramifié ou non, substitué ou non substitué, aliphatique, cyclanique ou aromatique,
- n a une valeur suffisante pour conférer au POS **A** une viscosité dynamique à 25°C allant de 1.000 à 1.000.000 mPa.s ;
- a est zéro ou 1 ;
-**B**- éventuellement au moins une résine polyorganosiloxane **B** fonctionnalisée par au moins un radical R^{f0} répondant à la définition donnée supra et présentant, dans sa structure, au moins deux motifs siloxyles différents choisis parmi ceux de formules (R¹)₃SiO_{1/2} (motif M), (R¹)₂SiO_{2/2} (motif D), R¹SiO_{3/2} (motif T) et SiO₂ (motif Q), l'un au moins de ces motifs étant un motif T ou Q, les radicaux R¹, identiques ou différents, ayant les significations données supra à propos de la formule (**A**), ladite résine ayant une teneur pondérale en radicaux fonctionnels R^{fo} allant de 0,1 à 10 %, étant entendu qu'une partie des radicaux R¹ sont des radicaux R^{fo};
**-C-au moins un réticulant C de formule :**
(R²)ₐSi[R^{fo}]₄₋ₐ
avec R², R^{fo} et a étant tels que définis ci-dessus,
-**D**- éventuellement au moins un polydiorganosiloxane **D** linéaire non réactif et non fonctionnalisé R^{fo} et de formule : 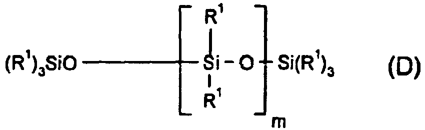 dans laquelle :
- les substituants R¹, identiques ou différents, ont les mêmes significations que celles données ci-avant pour le polyorganosiloxane **A** de formule (**A**) ;
- m a une valeur suffisante pour conférer au polymère de formule (**D**) une viscosité dynamique à 25°C allant de 10 à 200.000 mPa.s ;
-**E**- une quantité efficace d'un composé du vanadium **E** comme catalyseur ou accélérateur de réticulation ;
-**F**- une charge minérale **F**, notamment charge de renfort et/ou de bourrage, de préférence à base de silice ; et
-**H**- éventuellement au moins un agent auxiliaire **H**.

2. Composition selon la revendication 1, **caractérisée en ce que** le composé E est un composé du vanadium au degré d'oxydation 5, et en particulier un composé de formule (E₁) : **X₃VO** dans laquelle les radicaux X, identiques ou différents, sont choisis parmi : les ligands radicalaires X à 1 électron, notamment alcoxy ou atome d'halogène, e.g. CL, Br et F, et les ligands LX radicalaires à 3 électrons, en particulier un ligand dérivé de l'acétylacétone, d'un β-cétoester, d'un ester malonique, d'un composé allylé, d'un carbamate, d'un dithiocarbamate, d'un acide carboxylique.

3. Composition selon la revendication 3, **caractérisée en ce que** le composé du vanadium est un vanadate trialcoxy, de préférence choisi parmi: [(CH₃)₂CHO]₃VO, (CH₃CH₂O)₃VO, [(CH₃)₃CO]₃VO, [(CH₃CH₂)(CH₃)CHO]₃VO, [(CH₃)₂ (CH₂)CHO]₃VO.

4. Composition selon la revendication 1, **caractérisée en ce que** le composé **E** est un composé du vanadium au degré d'oxydation 4, et en particulier un composé de formule (E₂) : **X₂VO** dans laquelle les radicaux X, identiques ou différents, sont choisis parmi : les ligands radicalaires X à 1 électron, notamment alcoxy ou atome d'halogène, e.g. Br, F ou Cl, et les ligand- LX radicalaires à 3 électrons, en particulier un ligand dérivé de l'acétylacétone, d'un β-cétoester, d'un ester malonique, d'un composé allylé, d'un carbamate, d'un dithiocarbamate, d'un acide carboxylique.

5. Composition selon la revendication 1, **caractérisée en ce que** le composé du vanadium est choisi parmi: VOCl₂, [(CH₃)₂CHO]₂VO, (CH₃CH₂O)₂VO, [(CH₃)₃CO]₂VO, [(CH₃CH₂)(CH₃)CHO)₂VO, [(CH₃)₂(CH₂)CHO]₂VO.

6. Composition selon la revendication 1, **caractérisée en ce que** le composé du vanadium est choisi parmi: [(CH₃)₂CHO]₄V, (CH₃O)₄V, (CH₃CH₂O)₄V, [(CH₃)₃CO]₄V, [(CH₃CH₂)(CH₃)CHO]₄V, [(CH₃)₂(CH₂)CHO]₄V.

7. Composition selon la revendication 1, **caractérisée en ce que** le composé **E** est un composé du vanadium au degré d'oxydation 3 de formule (E₄) **XVO** dans laquelle le radical X est un ligand LX radicalaires à 3 électrons, en particulier un ligand dérivé de l'acétylacétone, d'un β-cétoester, d'un ester malonique, d'un composé allylé, d'un carbamate, d'un dithiocarbamate, d'un acide carboxylique.

8. Composition selon la revendication 1, **caractérisée en ce que** le composé **E** est un composé du vanadium au degré d'oxydation 5 comportant des ligands L₂X radicalaires à 5 électrons, notamment diényles, en particulier cyclopentadiényle.

9. Composition selon l'une quelconque des revendications précédentes, **caractérisée en ce qu'**elle comprend de 0,1 à 10, de préférence 0,5 à 6 parties en poids de catalyseur de réticulation/durcissement E.

10. Composition selon l'une quelconque des revendications précédentes, **caractérisée en ce que** les substituants de fonctionnalisation R^{fo} sont de type alcoxy et répondent à la formule OR⁴(CH₂CH₂O)_{b}-, avec R⁴ représentant indépendamment, un alkyle linéaire ou ramifié en C₁ à C₈ ; un cycloalkyle en C₃ à C₈ et b = 0 ou 1.

11. Composition selon l'une quelconque des revendications précédentes, **caractérisée en ce que** les substituants R¹ des polymères POS **A** fonctionnalisés, des résines **B** fonctionnalisées R^{fo} et des polymères facultatifs non fonctionnalisés et non réactifs **D** sont sélectionnés dans le groupe formé par :
- les radicaux alkyles et halogénoalkyles ayant de 1 à 13 atomes de carbone,
- les radicaux cycloalkyles et halogénocycloalkyles ayant de 5 à 13 atomes de carbone,
- les radicaux alcényles ayant de 2 à 8 atomes de carbone,
- les radicaux aryles et halogénoaryles mononucléaires ayant de 6 à 13 atomes de carbone,
- les radicaux cyanoalkyles dont les chaînons alkyles ont de 2 à 3 atomes de carbone,
les radicaux méthyle, éthyle, propyle, isopropyle, n-hexyle, phényle, vinyle et 3,3,3-trifluoropropyle étant particulièrement préférés.

## Patentansprüche

1. Einkomponenten-Polyorganosiloxan-Zusammensetzung (POS), die im wesentlichen frei von hydroxylierten POS ist, das heißt, weniger als 10 µmol an OH pro g der Zusammensetzung, für die Anwendung als Mastix-Harz, das bei Abwesenheit von Feuchtigkeit lagerstabil ist und in Anwesenheit von Wasser zu einem Elastomer vernetzt, wobei die Zusammensetzung umfasst:
- **A -** mindestens ein lineares, vernetzbares Polyorganopolysiloxan A der Formel 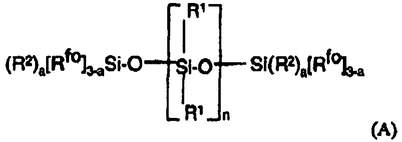 in der
- die Substituenten R¹, gleich oder verschieden, jeweils einen monovalenten, gesättigten oder ungesättigten, substituierten oder unsubstituierten, aliphatischen, cyclanischen oder aromatischen Kohlenwasserstoff-Rest mit 1 bis 13 Kohlenstoffatomen darstellen;
- die Substituenten R², gleich oder verschieden, jeweils einen monovalenten, gesättigten oder ungesättigten, substituierten oder unsubstituierten, aliphatischen, cyclanischen oder aromatischen Kohlenwasserstoff-Rest mit 1 bis 13 Kohlenstoffatomen darstellen;
• die Substituenten der Funktionalisierung R^{fo}, gleich oder verschieden, jeweils darstellen:
• einen Rest Oxim der Formel
(**R³)₂ C=N-O-**
mit R³, das unabhängig ein lineares oder verzweigtes Alkyl mit 1 bis 8 Kohlenstoffatomen; ein Cycloalkyl mit 3 bis 8 Kohlenstoffatomen, ein Alkenyl mit 2 bis 8 Kohlenstoffatomen darstellt,
• einen Rest Alkoxy der Formel:
**OR⁴(CH₂CH₂O)** _{b} -
mit R⁴, das unabhängig ein lineares oder verzweigtes Alkyl
mit 1 bis 8 Kohlenstoffatomen; ein Cycloalkyl mit 3 bis 8 Kohlenstoffatomen darstellt, und b = 0 oder 1;
• einen Rest Acyl der Formel: 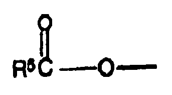 mit R⁵, das einen monovalenten, gesättigten oder ungesättigten, verzweigten oder unverzweigten, substituierten oder unsubstituierten, aliphatischen, cyclanischen oder aromatischen Kohlenwasserstoff-Rest mit 1 bis 13 Kohlenstoffatomen darstellt,
• einen Rest Enoxy der Formel:
R⁶R⁶C=CR⁶-O-
mit R⁶, gleich oder verschieden, das Wasserstoff oder einen monovalenten, gesättigten oder ungesättigten, verzweigten oder unverzweigten, substituierten oder unsubstituierten, aliphatischen, cyclanischen oder aromatischen Kohlenwasserstoff-Rest mit 1 bis 13 Kohlenstoffatomen darstellt,
- n einen ausreichenden Wert besitzt, um dem POS A eine dynamische Viskosität bei 25 °C zu verleihen, die von 1.000 bis zu 1.000.000 mPa.s reicht;
- a gleich 0 oder 1 ist;
- **B** - gegebenenfalls mindestens ein Polyorganosiloxan-Harz **B**, funktionalisiert durch mindestens einen Rest R^{fo}, welcher der oben angegebenen Definition entspricht und in seiner Struktur mindestens zwei unterschiedliche Struktureinheiten Siloxyl aufweist, ausgewählt unter denen der Formel (R¹) ₃SiO_{1/2} (Struktureinheit M), (R¹) ₂SiO_{2/2}, (Struktureinheit D), R¹SiO_{3/2} (Struktureinheit T) und SiO₂ (Struktureinheit Q), wobei mindestens eine dieser Struktureinheiten eine Struktureinheit T oder Q ist, die Reste R¹, gleich oder verschieden, die oben bei der Formel **(A)** angegebenen Bedeutungen besitzen, wobei das genannte Harz einen gewichtsmäßigen Gehalt an funktionellen Resten R^{fo} besitzt, der von 0,1 bis 10 % reicht, mit der Maßgabe, dass ein Teil der Reste R¹ Reste R^{f^{o}} sind;
- **C -** mindestens ein Vernetzungsmittel C der Formel:
(R²) ₐSi [R^{f^{o}}] ₄₋ₐ
mit R², R^{fo} und a wie vorstehend definiert,
- **D -** gegebenenfalls mindestens ein lineares Polydiorganosiloxan **D**, nicht reaktiv und nicht funktionalisiert R^{f^{o}}, der Formel: 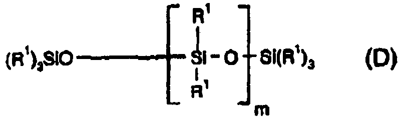 in der
- die Substituenten R¹, gleich oder verschieden, die gleichen Bedeutungen besitzen wie oben bei dem Polyorganosiloxan **A** der Formel **(A)** angegeben;
- m einen ausreichenden Wert besitzt, um dem Polymer der Formel **(D)** eine dynamische Viskosität bei 25 °C zu verleihen, die von 10 bis zu 200.000 mPa.s reicht;
- **E** - eine wirksame Menge von einer VanadiumVerbindung **E** als Katalysator oder Beschleuniger der Vernetzung;
- **F -** einen mineralischen Füllstoff F, insbesondere verstärkenden Füllstoff und/oder Füllung, vorzugsweise auf der Basis von Siliciumdioxid; und
- **H** - gegebenenfalls mindestens ein Hilfsmittel **H.**

2. Zusammensetzung nach Anspruch 1, **dadurch gekennzeichnet, dass** die Verbindung **E** eine Verbindung von Vanadium mit dem Oxidationsgrad 5 ist, und insbesondere eine Verbindung der Formel (E₁) : **X₃VO,** in der die Reste X, gleich oder verschieden, ausgewählt werden unter: den radikalischen Liganden X mit 1 Elektron, insbesondere Alkoxy oder Halogenatom, beispielsweise Cl, Br und F, und den radikalischen Liganden LX mit 3 Elektronen, insbesondere einem Liganden, der abgeleitet ist von Acetylaceton, einem β-Ketoester, einem Malonester, einer Allyl-Verbindung, einem Carbamat, einem Dithiocarbamat, einer Carbonsäure.

3. Zusammensetzung nach Anspruch 3, **dadurch gekennzeichnet, dass** die Verbindung von Vanadium ein Trialkoxyvanadat ist, vorzugsweise ausgewählt unter [(CH₃) ₂CHO]₃ VO, (CH₃CH₂O) ₃VO, [(CH₃) ₃CO] ₃VO, [(CH₃CH₂) (CH₃) CHO]₃ VO, [(CH₃) ₂(CH₂) CHO]₃VO.

4. Zusammensetzung nach Anspruch 1, **dadurch gekennzeichnet, dass** die Verbindung **E** eine Verbindung von Vanadium mit dem Oxidationsgrad 4 ist, und insbesondere eine Verbindung der Formel (E₂) : **X₂VO**, in der die Reste X, gleich oder verschieden, ausgewählt werden unter: den radikalischen Liganden X mit 1 Elektron, insbesondere Alkoxy oder Halogenatom, beispielsweise Cl, Br und F, und den radikalischen Liganden LX mit 3 Elektronen, insbesondere einem Liganden, der abgeleitet ist von Acetylaceton, einem β-Ketoester, einem Malonester, einer Allyl-Verbindung, einem Carbamat, einem Dithiocarbamat, einer Carbonsäure.

5. Zusammensetzung nach Anspruch 1, **dadurch gekennzeichnet, dass** die Verbindung von Vanadium ausgewählt wird unter VOCl₂, [(CH₃) ₂CHO] ₂VO, (CH₃CH₂O) ₂VO, [(CH₃) ₃CO] ₂VO, [(CH₃CH₂) (CH₃) CHO] ₂VO, [(CH₃) ₂(CH₂) CHO]₂VO.

6. Zusammensetzung nach Anspruch 1, **dadurch gekennzeichnet, dass** die Verbindung von Vanadium ausgewählt wird unter [(CH₃) ₂CHO]₄V, (CH₃O) ₄V, (CH₃CH₂O) ₄V, [(CH₃) ₃CO]₄V, [(CH₃CH₂) (CH₃) CHO]₄V, [(CH₃) ₂ (CH₂) CHO]₄V.

7. Zusammensetzung nach Anspruch 1, **dadurch gekennzeichnet, dass** die Verbindung **E** eine Verbindung von Vanadium mit dem Oxidationsgrad 3 der Formel (E₄) ist: **XVO,** in der der Rest X ein radikalischer Ligand LX mit 3 Elektronen ist, insbesondere ein Ligand, der abgeleitet ist von Acetylaceton, einem β-Ketoester, einem Malonester, einer Allyl-Verbindung, einem Carbamat, einem Dithiocarbamat, einer Carbonsäure.

8. Zusammensetzung nach Anspruch 1, **dadurch gekennzeichnet, dass** die Verbindung **E** eine Verbindung von Vanadium mit dem Oxidationsgrad 5 ist, umfassend radikalische Liganden L₂ X mit 5 Elektronen, besonders Dienyle, vor allem Cyclopentadienyle.

9. Zusammensetzung nach irgendeinem der vorstehenden Ansprüche, **dadurch gekennzeichnet, dass** sie 0,1 bis 10, vorzugsweise 0,5 bis 6 Gewichtsteile Katalysator **E** der Vernetzung/Härtung umfasst.

10. Zusammensetzung nach irgendeinem der vorstehenden Ansprüche, **dadurch gekennzeichnet, dass** die Substituenten der Funktionalisierung R^{f^{o}} vom Typ Alkoxy sind und der Formel OR⁴ (CH₂CH₂O) _{b}- entsprechen, mit R⁴, das unabhängig ein lineares oder verzweigtes Alkyl mit 1 bis 8 Kohlenstoffatomen; ein Cycloalkyl mit 3 bis 8 Kohlenstoffatomen darstellt und b = 0 oder 1 ist.

11. Zusammensetzung nach irgendeinem der vorstehenden Ansprüche, **dadurch gekennzeichnet, dass** die Substituenten R¹ der funktionalisierten Polymere POS **A**, der funktionalisierten Harze **B** R^{f^{o}} und der fakultativen, nicht funktionalisierten und nicht reaktiven Polymere **D** aus der Gruppe gewählt werden, die gebildet wird durch:
- die Reste Alkyl und Halogenalkyl mit 1 bis 13 Kohlenstoffatomen,
- die Reste Cycloalkyl und Halogencycloalkyl mit 5 bis 13 Kohlenstoffatomen,
- die Reste Alkenyl mit 2 bis 8 Kohlenstoffatomen,
- die mononuklearen Reste Aryl und Halogenaryl mit 6 bis 13 Kohlenstoffatomen,
- die Reste Cyanoalkyl, deren Kettenglieder Alkyl 2 bis 3 Kohlenstoffatome besitzen,
wobei die Reste Methyl, Ethyl, Propyl, Isopropyl, n-Hexyl, Phenyl, Vinyl und 3,3,3-Trifluorpropyl ganz besonders bevorzugt sind.

## Claims

1. Single-component polyorganosiloxane (POS) composition essentially devoid of hydroxylated pass, i.e. less than 10 µmol of OH per g of composition, for a mastic application which is stable on storage in the absence of moisture and which crosslinks in the presence of water to give an elastomer, which composition comprises:
**-A-** at least one crosslinkable linear polyorganopolysiloxane **A** of formula: 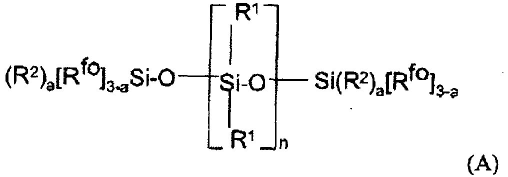 in which:
- the substituents R¹, which are identical or different, each represent a saturated or unsaturated, substituted or unsubstituted, aliphatic, cyclanic or aromatic, C₁ to C₁₃ monovalent hydrocarbon radical;
- the substituents R², which are identical or different, each represent a saturated or unsaturated, substituted or unsubstituted, aliphatic, cyclanic or aromatic, C₁ to C₁₃ monovalent hydrocarbon radical;
- the functionalization substituents R^{fo}, which are identical or different, each represent:
• an oxime residue of formula:
(R³)₂C=N-O-
with R³ independently representing a linear or branched C₁ to C₈ alkyl, a C₃ to C₈ cycloalkyl or a C₂-C₈ alkenyl,
• an alkoxy residue of formula:
R⁴O(CH₂CH₂O)_{b}-
with R⁴ independently representing a linear or branched C₁ to C₈ alkyl or a C₃ to C₈ cycloalkyl and b = 0 or 1;
• an acyl residue of formula: 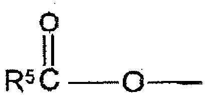 with R⁵ representing a saturated or unsaturated, branched or unbranched, substituted or unsubstituted, aliphatic, cyclanic or aromatic, C₁ to C₁₃ monovalent hydrocarbon radical,
• an enoxy residue of formula:
R⁶R⁶C=CR⁶-O-
with the R⁶ groups, which are identical or different, representing hydrogen or a saturated or unsaturated, branched or unbranched, substituted or unsubstituted, aliphatic, cyclanic or aromatic, C₁ to C₁₃ monovalent hydrocarbon radical,
- n has a value sufficient to confer, on the POS **A,** a dynamic viscosity at 25°C ranging from 1000 to 1000000 mPa·s;
- a is zero or 1;
**-B-** optionally at least one polyorganosiloxane resin **B** functionalized by at least one radical R^{fo} corresponding to the definition given above and exhibiting, in its structure, at least two different siloxyl units chosen from those of formulae (R¹)₃SiO_{1/2} (M unit), (R¹)₂SiO_{2/2} (D unit), R¹SiO_{3/2} (T unit) and SiO₂ (Q unit), at least one of these units being a T or Q unit, the radicals R¹, which are identical or different, having the meanings given above with respect to the formula (**A**) and said resin having a content by weight of functional radicals R^{fo} ranging from 0.1 to 10%, it being understood that a portion of the radicals R¹ are radicals R^{fo};
**-C-** at least one crosslinking agent **C** of formula:
(R²)ₐSi[R^{fo}]₄₋ₐ
with R², R^{fo} and a being as defined above,
**-D-** optionally at least one linear polydiorganosiloxane **D** which is unreactive and which is not functionalized with R^{fo}, of formula: 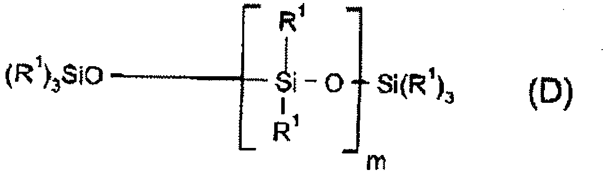 in which:
- the substituents R¹, which are identical or different, have the same meanings as those given above for the polyorganosiloxane **A** of formula (**A**);
- m has a value sufficient to confer, on the polymer of formula (**D**), a dynamic viscosity at 25°C ranging from 10 to 200000 mPa·s;
**-E-** an effective amount of a vanadium compound **E** as crosslinking catalyst or accelerator;
**-F-** an inorganic filler **F,** in particular a reinforcing and/or bulking filler, preferably based on silica;
**-H-** optionally at least one auxiliary agent **H.**

2. Composition according to Claim 1, **characterized in that** the compound **E** is a compound of vanadium in the 5 oxidation state and in particular a compound of formula (E₁): **X₃VO,** in which the radicals X, which are identical or different, are chosen from: 1-electron radical ligands X, in particular alkoxy or halogen atom, e.g. Cl, Br and F, and 3-electron radical ligands LX, in particular a ligand derived from acetylacetone, from a β-keto ester, from a malonic ester, from an allyl compound, from a carbamate, from a dithiocarbamate or from a carboxylic acid.

3. Composition according to Claim 3, **characterized in that** the vanadium compound is a trialkoxy vanadate, preferably chosen from: [(CH₃)₂CHO]₃VO, (CH₃CH₂O)₃VO, [(CH₃)₃CO]₃VO, [(CH₃CH₂)(CH₃)CHO]₃VO or [(CH₃)₂(CH₂)CHO]₃VO.

4. Composition according to Claim 1, **characterized in that** the compound **E** is a compound of vanadium in the 4 oxidation state and in particular a compound of formula (E₂): **X₂VO,** in which the radicals X, which are identical or different, are chosen from: 1-electron radical ligands X, in particular alkoxy or halogen atom, e.g. Br, F or Cl, and 3-electron radical ligands LX, in particular a ligand derived from acetylacetone, from a β-keto ester, from a malonic ester, from an allyl compound, from a carbamate, from a dithiocarbamate or from a carboxylic acid.

5. Composition according to Claim 1, **characterized in that** the vanadium compound is chosen from: VOCl₂, [(CH₃)₂CHO]₂VO, (CH₃CH₂O)₂VO, [(CH₃)₃CO]₂VO, [(CH₃CH₂) (CH₃)CHO]₂VO or [(CH₃)₂(CH₂)CHO]₂VO.

6. Composition according to Claim 1, **characterized in that** the vanadium compound is chosen from: [(CH₃)₂CHO]₄V, (CH₃O)₄V, (CH₃CH₂O)₄V, [(CH₃)₃CO]₄V, [(CH₃CH₂)(CH₃)CHO]₄V or [(CH₃)₂(CH₂)CHO]₄V.

7. Composition according to Claim 1, **characterized in that** the compound **E** is a compound of vanadium in the 3 oxidation state of formula (E₄): **XVO,** in which the radical X is a 3-electron radical ligand LX, in particular a ligand derived from acetylacetone, from a β-keto ester, from a malonic ester, from an allyl compound, from a carbamate, from a dithiocarbamate or from a carboxylic acid.

8. Composition according to Claim 1, **characterized in that** the compound **E** is a compound of vanadium in the 5 oxidation state comprising 5-electron radical ligands L₂X, in particular dienyl ligands, especially cyclopentadienyl ligands.

9. Composition according to any one of the preceding claims, **characterized in that** it comprises from 0.1 to 10, preferably 0.5 to 6, parts by weight of crosslinking/curing catalyst **E.**

10. Composition according to any one of the preceding claims, **characterized in that** the functionalization substituents R^{fo} are of alkoxy type and correspond to the formula R⁴O (CH₂CH₂O)_{b}-, with R⁴ independently representing a linear or branched C₁ to C₈ alkyl or a C₃ to C₈ cycloalkyl and b = 0 or 1.

11. Composition according to any one of the preceding claims, **characterized in that** the substituents R¹ of the functionalized polymers POS **A,** of the resins **B** functionalized by R^{fo} and of the optional nonfunctionalized and unreactive polymers **D** are selected from the group formed by:
- alkyl and haloalkyl radicals having from 1 to 13 carbon atoms,
- cycloalkyl and halocycloalkyl radicals having from 5 to 13 carbon atoms,
- alkenyl radicals having from 2 to 8 carbon atoms,
- mononuclear aryl and haloaryl radicals having from 6 to 13 carbon atoms,
- cyanoalkyl radicals, the alkyl members of which have from 2 to 3 carbon atoms,
the methyl, ethyl, propyl, isopropyl, n-hexyl, phenyl, vinyl and 3,3,3-trifluoropropyl radicals being particularly preferred.
